# EUROPÄISCHE PATENTSCHRIFT

(11) **EP 1 711 795 B1**
(45) Veröffentlichungstag und Bekanntmachung des Hinweises auf die Patenterteilung: **12.12.2007**
(21) Anmeldenummer: 05715248.0
(22) Anmeldetag: 03.02.2005
(51) Int. Cl.: G01N 15/14, G01N 15/12, B01L 3/00, G01N 27/44

(54) **MIKROFLUIDISCHES SYSTEM MIT EINER ELEKTRODENANORDNUNG UND ZUGEHORIGES ANSTEUERUNGSVERFAHREN**
MICROFLUIDIC SYSTEM COMPRISING AN ELECTRODE ARRANGEMENT AND ASSOCIATED CONTROL METHOD
SYSTEME MICROFLUIDIQUE PRESENTANT UN ENSEMBLE D'ELECTRODE ET PROCEDE CORRESPONDANT POUR LE COMMANDER

(30) Priorität: 04.02.2004 WO PCT/EP2004/001031; 04.02.2004 WO PCT/EP2004/001034; 08.04.2004 DE 102004017482
(43) Veröffentlichungstag der Anmeldung: 18.10.2006
(73) Patentinhaber: Evotec Technologies GmbH, 40225 Düsseldorf (DE)
(72) Erfinder: SCHNELLE, Thomas, 10243 Berlin (DE); PFENNIG, Annette, 10439 Berlin (DE); MÜLLER, Torsten, 10439 Berlin (DE)
(74) Vertreter: Beier, Ralph
(86) Internationale Anmeldenummer: PCT/EP2005/001084
(87) Internationale Veröffentlichungsnummer: WO 2005/075957

(56) Entgegenhaltungen:
- WO-A-00/37165
- WO-A-20/04070362
- DE-A1- 19 952 322
- US-A- 4 578 167
- MUELLER T ET AL: "3-D MICROELECTRODE SYSTEM FOR HANDLING AND CAGING SINGLE CELLS AND PARTICLES" BIOSENSORS & BIOELECTRONICS, ELSEVIER SCIENCE PUBLISHERS, BARKING, GB, Bd. 14, 15. März 1999 (1999-03-15), Seiten 247-256, XP000912020 ISSN: 0956-5663

## Beschreibung

Die Erfindung betrifft ein mikrofluidisches System, insbesondere in einem Partikelsortierer, gemäß dem Oberbegriff des Anspruchs 1 sowie ein Ansteuerungsverfahren für eine Elektrodenanordnung in einem derartigen mikrofluidischen System gemäß dem Oberbegriff des Anspruchs 12.

Aus MÜLLER, T. et al.: "A 3-D microelectrode system for handling and caging single cells and particles", Biosensors & Bioelectronics 14 (1999) 247-256 ist ein mikrofluidisches System zur Untersuchung biologischer Zellen bekannt, bei dem die zu untersuchenden Zellen in einem Trägerstrom suspendiert sind und dielektrophoretisch manipuliert und sortiert werden. In dem Trägerstrom werden die zu untersuchenden Zellen zunächst durch eine trichterförmige dielektrophoretische Elektrodenanordnung (engl. "funnel") aufgereiht und anschließend in einem dielektrophoretischen Käfig (engl. "cage") festgehalten, um die in dem Käfig befindlichen Zellen im ruhenden Zustand untersuchen zu können, wozu mikroskopische, spektroskopische oder fluoreszenzoptische Messmethoden angewendet werden können. In Abhängigkeit von der Untersuchung der in dem dielektrophoretischen Käfig gefangenen Zellen können diese anschließend sortiert werden, wozu der Bediener eine Sortiereinrichtung (engl. "switch") ansteuert, die aus einer in dem Trägerstrom stromabwärts hinter dem dielektrophoretischen Käfig angeordneten dielektrophoretischen Elektrodenanordnung besteht. In diesem bekannten mikrofluidischen System sind in dem Trägerstromkanal also hintereinander mehrere Manipulationseinrichtungen angeordnet, welche die in dem Trägerstrom suspendierten Partikel manipulieren.

Nachteilig an dem bekannten mikrofluidischen System ist deshalb die Tatsache, dass in dem Trägerstromkanal eine Vielzahl von Elektroden angeordnet werden muss, um die verschiedenen Manipulationseinrichtungen (z.B. "funnel", "cage" und "switch") zu bilden.

Ferner ist aus DE 199 52 322 A1 ein mikrofluidisches System zur Partikeltrennung mit Hilfe eines optischen Käfigs bekannt, wobei der optische Käfig die Partikel durch eine dielektrische Kraft sortiert.

Weiterhin ist aus US 4 578 167 A ein mikrofluidisches System zum Einfangen biologischer Zellen an den Elektroden und zur Bildung orientierter Ketten nebeneinanderliegender Zellen an den Elektroden und zur anschließenden Durchführung einer Zellfusion bekannt.

Schließlich offenbart WO 00/37165 A ein mikrofluidisches System zum Umlenken eines Flüssigkeitsstroms mittels mindestens teilweise der Strömungsrichtung entgegengerichteten pfeilförmigen Elektroden.

Der Erfindung liegt deshalb die Aufgabe zugrunde, das vorstehend beschriebene bekannte mikrofluidische System zu vereinfachen.

Diese Aufgabe wird durch die Merkmale der nebengeordneten Ansprüche gelöst.

Die Erfindung umfasst die allgemeine technische Lehre, die Funktionen verschiedener Manipulationseinrichtungen in einer einzigen Elektrodenanordnung zu integrieren, so dass nicht jede Manipulationseinrichtung in dem Trägerstromkanal eine separate Elektrodenanordnung benötigt. Die gemeinsame Elektrodenanordnung erfüllt hierbei also in Abhängigkeit von ihrer Ansteuerung verschiedene Manipulationsfunktionen (z.B. fangen und sortieren von Partikeln)

In dem Trägerstromkanal des erfindungsgemäßen mikrofluidischen Systems sind also mindestens zwei Manipulationseinrichtungen ("cage" und "switch") angeordnet, wobei diese beiden Manipulationseinrichtungen eine gemeinsame Elektrodenanordnung aufweisen. Die gemeinsame Elektrodenanordnung der beiden Manipulationseinrichtungen kann zur Durchführung verschiedener Manipulationsfunktionen angesteuert werden. Beispielsweise kann die gemeinsame Elektrodenanordnung so angesteuert werden, dass die in den Trägerstrom suspendierten Partikel in der als Feldkäfig geschalteten Elektrodenanordnung fixiert werden. Es ist jedoch alternativ auch möglich, dass die gemeinsame Elektrodenanordnung so angesteuert wird, dass die in dem Trägerstrom suspendierten Partikel in eine von mehreren Ausgangsleitungen sortiert werden.

In dem bevorzugten Ausführungsbeispiel sind in die gemeinsame Elektrodenanordnung also die Funktionen von zwei Manipulationseinrichtungen integriert, nämlich die Funktion eines Feldkäfigs und die Funktion einer Sortiereinrichtung bzw. einer Partikelweiche (engl. "switch"). Die Erfindung ist jedoch hinsichtlich der Anzahl der in die gemeinsame Elektrodenanordnung zu integrierenden Manipulationsfunktionen nicht auf diese beiden Funktionen beschränkt. Es ist vielmehr auch möglich, andere Manipulationsfunktionen oder eine größere Anzahl von unterschiedlichen Manipulationsfunktionen in die gemeinsame Elektrodenanordnung zu integrieren. Insbesondere besteht im Rahmen der Erfindung die Möglichkeit, drei verschiedene Manipulationseinrichtungen in eine gemeinsame Elektrodenanordnung zu integrieren, wobei es sich bei den drei Manipulationseinrichtungen beispielsweise um einen Feldkäfig (engl. "cage"), eine Partikelweiche (engl. "switch") und eine Zentriereinrichtung (engl. "funnel") handeln kann. Der Aufbau und die Funktionsweise dieser Manipulationseinrichtungen ist in der bereits eingangs erwähnten Veröffentlichung von MÜLLER, T. et al.: "A 3-D microelectrode system for handling and caging single cells and particles" beschrieben, deren Inhalt der vorliegenden Beschreibung in vollem Umfang zuzurechnen ist.

Im Übrigen ist der im Rahmen der Erfindung verwendete Begriff einer Manipulationseinrichtung allgemein zu verstehen und nicht auf die vorstehend erwähnten Typen von Manipulationseinrichtungen beschränkt.

Beispielsweise kann es sich bei der Manipulationseinrichtung um eine dielektrische oder dielektrophoretischen Manipulationseinrichtung handeln.

Darüber hinaus könnte die Manipulationseinrichtung die Partikel (z.B. biologische Zellen) in herkömmlicher Weise dielektrisch deformieren, so dass die Manipulationseinrichtung als Deformationseinrichtung zu bezeichnen wäre.

Weiterhin besteht im Rahmen der Erfindung die Möglichkeit, dass die Manipulationseinrichtung die Partikel (z.B. biologische Zellen) poriert, was an sich ebenfalls bekannt ist. Hierbei wird die Zellhülle mittels eines Hochspannungsimpules aufgerissen und damit durchlässig gemacht. Die Manipulationseinrichtung kann in diesem Fall auch als Elektroporationseinrichtung bezeichnet wird.

Bei der Manipulationseinrichtung im erfindungsgemäßen Sinne kann es sich jedoch auch um eine Einrichtung zur Zellfusionierung handeln.

Ferner besteht im Rahmen der Erfindung die Möglichkeit, dass die Manipulationseinrichtung die Partikel thermisch behandelt oder sowohl dielektrophoretisch als auch elektrophoretisch arbeitet.

Der im Rahmen der Erfindung verwendete Begriff einer gemeinsamen Elektrodenanordnung ist vorzugsweise dahingehend zu verstehen, dass die gemeinsame Elektrodenanordnung mindestens eine Elektrode aufweist, die Bestandteil mehrerer verschiedener Manipulationseinrichtungen ist.

Weiterhin ist zu erwähnen, dass die Elektrodenanordnung des erfindungsgemäßen mikrofluidischen Systems mehrere Elektroden aufweisen kann, die sich hinsichtlich ihrer Form, Länge und Breite unterscheiden können.

Bei der Integration eines dielektrophoretischen Feldkäfigs und einer dielektrophoretischen Partikelweiche in einer gemeinsamen Elektrodenanordnung ist die gemeinsame Elektrodenanordnung in einem Verzweigungsbereich des Trägerstromkanals angeordnet, in dem sich der Trägerstromkanal in mehrere Ausgangsleitungen verzweigt. Bei dieser Anordnung kann die gemeinsame Elektrodenanordnung wahlweise als Partikelweiche oder als Feldkäfig geschaltet werden, was bei einer anderen Anordnung weiter stromaufwärts in dem Trägerstromkanal schwieriger wäre. Der im Rahmen der Erfindung verwendete Begriff eines Verzweigungsbereichs des Trägerstromkanals ist allgemein zu verstehen und nicht auf den Schnittpunkt der Ausgangsleitungen beschränkt, sondern umfasst beispielsweise auch die sogenannte "Separatrix", die dem geometrischen Schnittpunkt der Ausgangsleitung stromaufwärts vorgelagert ist.

In einem bevorzugten Ausführungsbeispiel der Erfindung verläuft in dem Trägerstromkanal eine Trennlinie, wobei die auf der einen Seite der Trennlinie befindlichen Partikel ohne eine Ansteuerung der Partikelweiche in die eine Ausgangsleitung strömen, während die auf der anderen Seite der Trennlinie befindlichen Partikel ohne eine Ansteuerung der Partikelweiche in die andere Ausgangsleitung strömen. Die auf die verschiedenen Ausgangsleitungen zu sortierenden Partikel müssen hierbei also lediglich auf eine Seite der Trennlinie gebracht werden und strömen dann selbständig in die vorgesehene Ausgangsleitung.

Bei der vorstehend erwähnten Trennlinie kann es sich um eine reale Trennwand handeln, die zwei Teilströme voneinander trennt, wobei die beiden Teilströme in jeweils eine bestimmte Ausgangsleitung strömen. Es ist jedoch alternativ auch möglich, dass die Trennlinie lediglich eine gedachte Linie bzw. Fläche zwischen den beiden Teilströmen ist.

In einer Variante der Erfindung ist die Partikelweiche hierbei im Wesentlichen auf der Trennlinie angeordnet. Die Partikelweiche muss hierbei also stets aktiv angesteuert werden, um den jeweiligen Partikel mit einer ausreichenden Sicherheit in die vorgesehene Ausgangsleitung zu befördern.

In einer anderen Variante der Erfindung ist die Partikelweiche dagegen bezüglich der Strömungsrichtung in dem Trägerstromkanal seitlich neben der Trennlinie angeordnet, wobei die Partikel der Partikelweiche vorzugsweise durch eine stromaufwärts gelegene Zentriereinrichtung (engl. "funnel") zugeführt werden. Dies bietet den Vorteil, dass die Partikelweiche nur dann aktiv angesteuert werden muss, wenn ein Partikel über die Trennlinie hinaus abgelenkt werden soll, um in die entsprechende Ausgangsleitung auf der gegenüberliegenden Seite der Trennlinie zu gelangen. Falls ein Partikel dagegen in die Ausgangsleitung auf der Seite der Partikelweiche strömen soll, ist hierbei keine aktive Ansteuerung der Partikelweiche erforderlich. Hierbei kann die Partikelweiche auf der Seite der Trennlinie angeordnet sein, aus der die Ausgangsleitung für negativ selektierte Partikel (engl. "waste") abzweigt. Es ist jedoch alternativ auch möglich, dass die Partikelweiche auf der Seite der Trennlinie angeordnet ist, aus der die Ausgangsleitung für positiv selektierte Partikel abzweigt.

In einem Ausführungsbeispiel der Erfindung weist die gemeinsame Elektrodenanordnung mindestens eine pfeilförmige Elektrode und mehrere Ablenkelektroden auf, wobei die pfeilförmige Elektrode entgegen der Strömungsrichtung des Trägerstroms ausgerichtet ist, während die Ablenkelektroden stromaufwärts vor der pfeilförmigen Elektrode angeordnet sind und an die pfeilförmige Elektrode angrenzen. Beim Betrieb als dielektrophoretische Partikelweiche wird die Pfeilelektrode hierbei permanent aktiviert, während das Umlenken in die verschiedenen Ausgangsleitungen durch Schalten der verschiedenen Ablenkelektroden erfolgt. Diese Anordnung einer dielektrophoretischen Partikelweiche wird auch als "Ultra Fast Sorter" (UFS) bezeichnet und ermöglicht eine schnelle Sortierung der suspendierten Partikel. Darüber hinaus lässt sich auch diese Elektrodenanordnung als Feldkäfig schalten, um die in dem Trägerstrom suspendierten Partikel zu fixieren.

In den bevorzugten Ausführungsbeispielen weist die gemeinsame Elektrodenanordnung sechs oder acht Elektroden auf, die getrennt ansteuerbar sind, um die gewünschte Manipulationsfunktion (z.B. Partikelfixierung oder Partikelsortierung) auszuführen. Die Erfindung ist jedoch hinsichtlich der Anzahl der Elektroden der gemeinsamen Elektrodenanordnung nicht auf sechs oder acht Elektroden beschränkt, sondern grundsätzlich auch mit anderen Konfigurationen realisierbar.

Weiterhin ist zu erwähnen, dass das erfindungsgemäße mikrofluidische System vorzugsweise eine erste Messstation aufweist, welche die in dem Trägerstrom suspendierten Partikel stromaufwärts vor der gemeinsamen Elektrodenanordnung im strömenden Zustand untersucht.

Diese Untersuchung kann beispielsweise die Intensität einer Fluoreszenz, die Vitalität einer Zelle und/oder die Frage betreffen, ob es sich um eine einzelne Zelle oder ein Aggregat von mehreren Zellen handelt. Weiterhin kann bei dieser Untersuchung ermittelt werden, ob es sich um Zellen oder Material handelt, das in Form und Größe nicht Primärziel der näheren Untersuchung ist, zum Beispiel Verunreinigungen oder andere Zellen, sofern sie sich von den Vielzellen unterscheiden. Neben geometrischen Parametern können auch stoffliche Parameter ermittelt werden. Dabei kann es sich bspw. um fluoreszenztechnisch messbare chemische Konzentrationen aber auch um physikalische Parameter wie Viskosität und Elastizität handeln, die über eine Evaluierung der im elektrischen Feld auftretenden Deformationen bzw. Relaxationen bestimmt werden kann. Im Rahmen dieser Untersuchung kann beispielsweise eine Durchlichtmessung, eine Fluoreszenzmessung und/oder eine Impedanzspektroskopie erfolgen. Darüber hinaus ist es möglich, dass zunächst eine Durchlichtmessung und anschließend eine Fluoreszenzmessung erfolgt, wobei die Durchlichtmessung und die Fluoreszenzmessung vorzugsweise in räumlich getrennten Untersuchungsfenstern (engl. "region of interest") erfolgen. Die Durchlichtmessung kann beispielsweise die Unterscheidung zwischen lebenden und toten biologischen Zellen ermöglichen, während die Fluoreszenzmessung dazu verwendet werden kann, um zu untersuchen, ob die in dem Trägerstrom suspendierten Partikel einen Fluoreszenzmarker tragen.

Falls im Rahmen der Voruntersuchung sowohl eine Durchlichtmessung als auch eine Fluoreszenzmessung in räumlich getrennten Untersuchungsfenstern erfolgt, so ist es vorteilhaft, wenn das Untersuchungsfenster für die Durchlichtmessung in dem Trägerstrom stromaufwärts vor dem Untersuchungsfenster für die Fluoreszenzmessung liegt. Es ist jedoch alternativ auch möglich, dass das Untersuchungsfenster für die Durchlichtmessung in dem Trägerstrom stromabwärts hinter dem Untersuchungsfenster für die Fluoreszenzmessung angeordnet ist.

Vorzugsweise wird im Rahmen der Untersuchung in der ersten Messstation ein optisches Bild aufgenommen, was eine digitale Bildauswertung zur Klassifizierung der Partikel ermöglicht. Vorzugsweise werden die Partikel hierbei morphologisch untersucht, um beispielsweise eine einzelne biologische Zelle von einem Zellklumpen unterscheiden zu können. Der im Rahmen der vorliegenden Beschreibung verwendete Begriff eines optischen Bildes ist jedoch allgemein zu verstehen und nicht auf zweidimensionale Bilder im herkömmlichen Wortsinne beschränkt. Vielmehr umfasst der Begriff eines optischen Bildes im Sinne der Erfindung auch eine punkt- oder linienförmige optische Abtastung des Trägerstroms bzw. der in dem Trägerstrom suspendierten Partikel. Beispielsweise kann die Helligkeit entlang einer Linie quer zum Trägerstromkanal aufintegriert werden, um einzelne Partikel zu detektieren und zu klassifizieren.

Die Unterscheidung lebender und toter Zellen im Rahmen der Untersuchung in der ersten Messstation kann bei einer Durchlichtmessung durch eine Auswertung der Intensitätsverteilung in dem aufgenommenen optischen Bild erfolgen. Ein spezielles Prinzip dieser Durchlichtmessung mit den erwähnten Eigenschaften ist beispielsweise die Phasenkontrast-Beleuchtung. So weisen lebende biologische Zellen eine Ringstruktur mit einem in der Durchlichtmessung relativ hellen Rand und einem dunkleren Mittelpunkt auf, wohingegen tote biologische Zellen bei einer Durchlichtmessung eine annähernd einheitliche Helligkeit aufweisen und dunkel gegen den Hintergrund erscheinen.

Zusätzlich zu der Untersuchung der Partikel in der ersten Messstation erfolgt vorzugsweise eine weitere Messung in einer zweiten Messstation, welche die in dem Feldkäfig fixierten Partikel untersucht. Die Fixierung der Partikel während der Untersuchung ist vorteilhaft, da auf diese Weise eine wesentlich genauere Untersuchung möglich ist.

Bei der Untersuchung in der zweiten Messstation können beispielsweise bestimmte Moleküle innerhalb einer Zelle lokalisiert werden. Beispielsweise können im Rahmen dieser Untersuchung Moleküle lokalisiert werden, die mit einem Fluoreszenzfarbstoff markiert sind.

Bei dem Fluoreszenzfarbstoff kann es sich beispielsweise um molekularbiologisch produzierte "Tags" von "Green Fluorescent Protein" und dessen Derivate, andere autofluoreszente Proteine handeln. Als Fluoreszenzfarbstoffe eignen sich jedoch auch solche Fluoreszenzfarbstoffe, die an ein zelluläres Molekül kovalent oder nicht-kovalent binden. Darüber hinaus können als Fluoreszenzfarbstoffe auch fluorigene Substanzen eingesetzt werden, die von zellulären Enzymen in fluoreszierende Produkte umgesetzt werden oder sogenannte FRET-Paare (Fluoreszenz-Resonanz-Energietransfer). Der Zustand der eingesetzten Fluoreszenzfarbstoffe kann beispielsweise anhand ihrer spektralen Eigenschaften oder durch Biolumineszenz unterschieden werden.

Anhand der Lokalisation von Molekülen innerhalb einer Zelle kann auch die Struktur und die Funktion der Moleküle ermittelt werden. Hierbei kann beispielsweise unterschieden werden nach dem Vorkommen in der Plasmamembran, im Zytosol, in den Mitochondrien, im Golgi-Apparat, in Endosomen, in Lysosomen, im Zellkern, im Spindelapparat, im Zyto-Skelett, Kolokalisation mit Aktin, Tubulin.

Ferner kann im Rahmen der Haupt- und/oder Voruntersuchung in der ersten bzw. zweiten Messstation die Morphologie einer Zelle bestimmt werden, wobei auch Farbstoffe eingesetzt werden können. Darüber hinaus können im Rahmen der Haupt- und/oder Voruntersuchung auch zwei oder mehr Zustände einer Zellpopulation unterschieden werden.

Weiterhin ist es im Rahmen der Hauptuntersuchung in der zweiten Messstation möglich, ein zelluläres Signal anhand der Translokation eines fluoreszenzmarkierten Moleküls zu bestimmen, z.B. Rezeptoraktivierung gefolgt von Rezeptor-Internalisierung, Rezeptor-Aktivierung gefolgt von der Bindung von Arrestin, Rezeptor-Aggregation, Übergang eines Moleküls von der Plasmamembran ins Zytosol, vom Zytosol in die Plasmamembran, vom Zytosol in den Zellkern oder vom Zellkern ins Zytosol.

Ferner kann im Rahmen der Haupt- und/oder Voruntersuchung auch die Wechselwirkung zweier Moleküle bestimmt werden, wobei vorzugsweise mindestens eines der wechselwirkenden Moleküle einen Fluoreszenzmarker trägt und die Wechselwirkung z.B. durch kolokalisationsfreier Fluoreszenzfarben, ein FRET oder eine Änderung der Fluoreszenz-Lebenszeit gezeigt wird.

Im Rahmen der Haupt- und/oder Voruntersuchung kann jedoch auch der Status einer Zelle innerhalb eines Zellzyklus bestimmt werden, wobei vorzugsweise die Morphologie der Zelle oder die Anfärbung des zellulären Chromatins ausgewertet wird.

Eine weitere Möglichkeit für die Haupt- und/oder Voruntersuchung besteht darin, das Membranpotential einer Zelle zu bestimmen, wobei vorzugsweise membranpotentialsensitive Farbstoffe eingesetzt werden. Vorzugsweise werden hierbei Farbstoffe verwendet die hinsichtlich des Plasmamembranpotentials und/oder des mitochondrialen Membranpotentials sensitiv sind.

Darüber hinaus kann im Rahmen der Haupt- und/oder Voruntersuchung auch die Vitalität einer Zelle ermittelt werden wobei vorzugsweise die Morphologie der Zelle ausgewertet wird und/oder fluorigene Substanzen eingesetzt werden, die zwischen lebenden und toten Zellen unterscheiden können.

Ferner können bei der Haupt- und/oder Voruntersuchung auch zytotoxische Effekte untersucht und/oder der intrazelluläre pH-Wert bestimmt werden.

Es ist auch möglich, im Rahmen der Haupt- und/oder Voruntersuchung die Konzentration eines oder mehrerer Ionen innerhalb einer Zelle zu bestimmen.

Auch kann bei der Haupt- und/oder Voruntersuchung eine enzymatische Aktivität innerhalb einer Zelle ermittelt werden, wobei vorzugsweise fluorigene oder chromogene Substanzen, insbesondere Kinasen, Phosphatasen oder Proteasen, eingesetzt werden können.

Ferner kann bei der Haupt- und/oder Voruntersuchung die Produktionsleistung von Zellen bestimmt werden, die biologische Produkte erzeugen, wie beispielsweise Proteine, Peptide, Antikörper, Kohlenhydrate oder Fette, wobei eine der beschriebenen Methoden angewendet werden kann.

Schließlich können im Rahmen der Hauptuntersuchung in der zweiten Messstation auch Zell-Stresspfade, metabolische Pfade, Zellwachstumspfade, Zellteilungspfade und andere Signaltransduktionspfade bestimmt werden.

Die Erfindung ist jedoch nicht auf das vorstehend beschriebene erfindungsgemäße mikrofluidische System als Einzelteil beschränkt, sondern umfasst auch ein Gerät, insbesondere einen Zellsortierer mit einem derartigen mikrofluidischen System als Bauteil.

Ferner umfasst die Erfindung auch ein Ansteuerungsverfahren zur elektrischen Ansteuerung der gemeinsamen Elektroden entsprechend der gewünschten Manipulationsfunktion.

Weiterhin ist zu erwähnen, dass der im Rahmen der Erfindung verwendete Begriff eines Partikels allgemein zu verstehen ist und nicht auf einzelne biologische Zellen beschränkt ist. Vielmehr umfasst dieser Begriff auch synthetische oder biologische Partikel wobei sich besondere Vorteile ergeben, wenn die Partikel biologische Materialien, also beispielsweise biologische Zellen, Zellgruppen, Zellbestandteile, Viren oder biologisch relevante Makromoleküle, jeweils ggf. im Verbund mit anderen biologischen Partikeln oder synthetischen Trägerpartikeln umfassen. Synthetische Partikel können feste Partikel, flüssige, vom Suspensionsmedium abgegrenzte Teilchen oder Mehrphasenpartikel umfassen, die gegenüber dem Suspensionsmedium in dem Trägerstrom eine getrennte Phase bilden.

Ferner ist zu erwähnen, dass die Elektrodenanordnungen vorzugsweise dreidimensionale Anordnungen sind. Es ist zwar auch möglich, dass die Elektrodenanordnungen nur auf einer Kanalseite prozessiert wurden. Besonders vorteilhaft ist es aber, die Elektrodenanordnungen an zwei gegenüber liegenden Kanalwänden parallel anzuordnen, wobei in den Zeichnungen in der Aufsicht nur eine Anordnung erkennbar ist. Beispielsweise kann ein "Funnel" aus zwei oder vier Elektroden bestehen.

Schließlich umfasst die Erfindung auch die neuartige Verwendung des erfindungsgemäße mikrofluidischen Systems zum Untersuchen und/oder Sortieren von Partikeln, insbesondere von biologischen Zellen.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische Darstellung eines erfindungsgemäßen mikrofluidischen Systems,
- Figur 2: ein weiteres Ausführungsbeispiel eines erfindungsgemäßen mikrofluidischen Systems,
- Figur 3: ein anderes alternatives Ausführungsbeispiel eines erfindungsgemäßen mikrofluidischen Systems,
- Figur 4: ein alternatives Beispiel eines mikrofluidischen Systems, bei dem die Sortiereinrichtung stromaufwärts vor dem Verzweigungsbereich angeordnet ist,
- Figur 5: ein weiteres Ausführungsbeispiel eines mikrofluidischen Systems, bei dem die Sortiereinrichtung in dem Trägerstromkanal außermittig angeordnet ist,
- Figur 6: ein erfindungsgemäßes mikrofluidisches System mit drei Ausgangsleitungen,
- Figur 7: ein nicht erfindungsgemäßes Ausführungsbeispiel eines mikrofluidischen Systems mit einem mittigen Trägerstromkanal, der von zwei Nebenstromkanälen benachbart ist,
- Figur 8: ein Beispiel einer im Zusammenhang mit der Erfindung verwendbaren gemeinsamen Elektrodenanordnung, welche die Funktion eines Feldkäfigs und einer im Zusammenhang mit der Erfindung verwendbaren Zentriereinrichtung integriert,
- Figur 9: ein weiteres Beispiel einer im Zusammenhang mit der Erfindung verwendbaren Elektrodenanordnung, welche die Funktion eines Feldkäfigs und einer Zentriereinrichtung integriert,
- Figur 10: eine schematische Darstellung einer im Zusammenhang mit der Erfindung verwendbaren Elektrodenanordnung sowie
- Figur 11: ein weiteres Ausführungsbeispiel eines erfindungsgemäßen mikrofluidischen Systems.

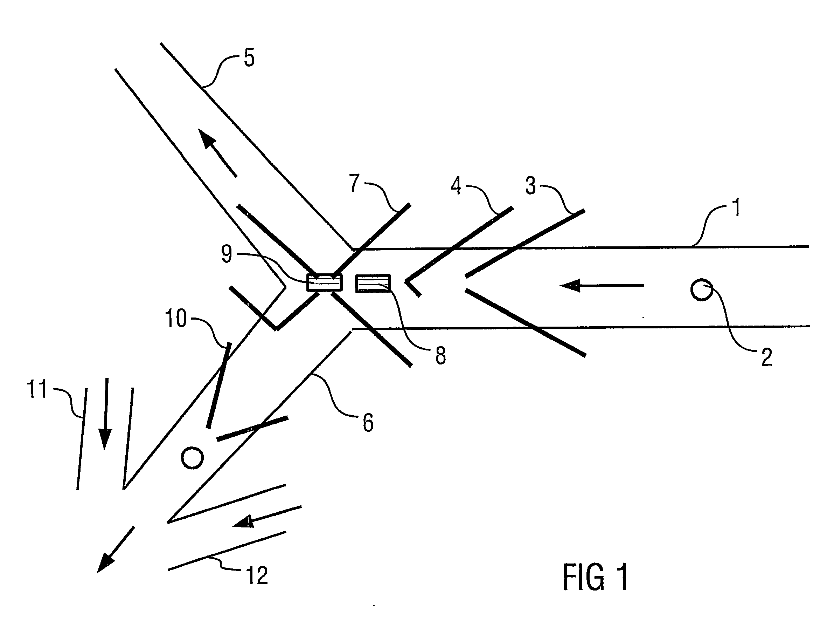

Die schematische Darstellung in Figur 1 zeigt ein mikrofluidisches System mit einem Trägerstromkanal 1 zur Zuführung eines Trägerstroms mit darin suspendierten Partikeln 2.

In dem Trägerstromkanal 1 ist eine dielektrophoretische Elektrodenanordnung 3 angeordnet, welche die Partikel 2 in dem Trägerstrom zentriert und in Strömungsrichtung hintereinander aufreiht. Der Aufbau und die Funktionsweise der Elektrodenanordnung 3 ist beispielsweise in der bereits eingangs erwähnten Veröffentlichung von MÜLLER, T. et al.: "A 3-D microelectrode system for handling and caging single cells and particles" beschrieben, wo die Elektrodenanordnung 3 als "Funnel" bezeichnet wird. Der Inhalt dieser Veröffentlichung ist deshalb der vorliegenden Beschreibung hinsichtlich des Aufbaus und der Funktionsweise der Elektrodenanordnung 3 in vollem Umfang zuzurechnen.

Stromabwärts hinter der Elektrodenanordnung 3 befindet sich in dem Trägerstromkanal 1 eine weitere dielektrophoretische Elektrodenanordnung 4, die es ermöglicht, die Partikel 2 vorübergehend zu parken. Der Aufbau und die Funktionsweise der Elektrodenanordnung 4 ist beispielsweise in MÜLLER, T. et al.: "Life cells in cellprocessors" (Bioworld, 2-2002) beschrieben, wo die Elektrodenanordnung 4 als "Hook" bezeichnet wird. Der Inhalt dieser Veröffentlichung ist deshalb hinsichtlich des Aufbaus und der Funktionsweise der Elektrodenanordnung 1 der vorliegenden Beschreibung in vollem Umfang zuzurechnen, so dass an dieser Stelle auf eine detaillierte Beschreibung der Elektrodenanordnung 4 verzichtet werden kann.

Stromabwärts hinter der Elektrodenanordnung 4 verzweigt der Trägerstromkanal 1 in zwei Ausgangsleitungen 5, 6, wobei in dem Verzweigungsbereich eine weitere Elektrodenanordnung 7 angeordnet ist, die wahlweise als dielektrophoretischer Feldkäfig oder als Partikelweiche angesteuert werden kann. Hinsichtlich des Aufbaus und der Ansteuerung der Elektrodenanordnung 7 als Partikelweiche oder als Feldkäfig wird auf die bereits eingangs erwähnte Veröffentlichung von MÜLLER, T. et al.: "A 3-D microelectrode system for handling and caging single cells and particles" verwiesen, deren Inhalt der vorliegenden Beschreibung hinsichtlich der Gestaltung der Elektrodenanordnung 7 in vollem Umfang zuzurechnen ist. Die Elektrodenanordnung 7 vereinigt hierbei also die Funktionen zweier im Stand der Technik getrennter Manipulationseinrichtungen, nämlich zum einen die Funktion eines dielektrophoretischen Feldkäfigs (engl. "cage") und zum anderen die Funktion einer Partikelweiche (engl. "switch"). Zur Auswahl der gewünschten Funktion der Elektrodenanordnung 7 müssen die einzelnen Elektroden der Elektrodenanordnung 7 lediglich entsprechend angesteuert werden, was für die einzelnen getrennten Manipulationseinrichtungen ("Cage" oder "Switch") an sich aus der bereits eingangs erwähnten Veröffentlichung von MÜLLER, T. et al. bekannt ist.

In dem Trägerstromkanal 1 befindet sich zwischen den Elektrodenanordnungen 4 und 7 eine erste Messstation 8, die eine Voruntersuchung der in dem Trägerstrom suspendierten Partikel 2 durchführt, wobei die Voruntersuchung in der eingangs beschriebenen Weise erfolgen kann.

In Abhängigkeit von dem Ergebnis der Voruntersuchung wird die Elektrodenanordnung 7 dann entweder als Feldkäfig oder als Partikelweiche geschaltet. Zunächst befindet sich die Elektrodenanordnung 7 im Betriebsmodus Weiche.

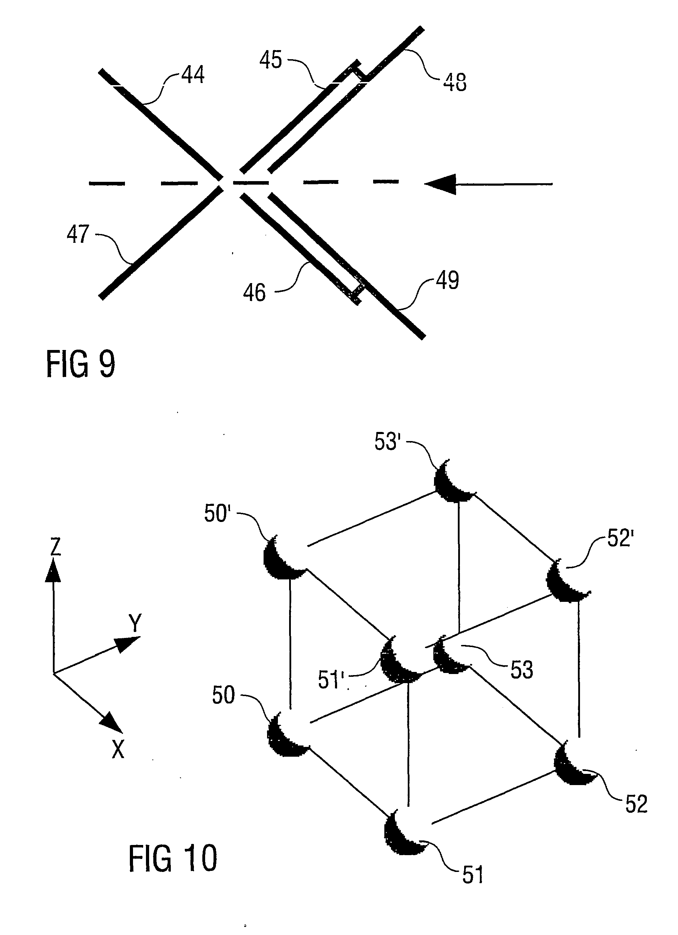

Falls das Ergebnis der Untersuchung in der Messstation 8 beispielsweise ergibt, dass der untersuchte Partikel 2 nicht weiter interessiert, so wird dieser Partikel 2 in die Ausgangsleitung 5 für nicht interessierende Partikel befördert. Falls die Untersuchung in der Messstation 8 dagegen ergibt, dass der Partikel 2 den Messkriterien der Voruntersuchung genügt, so wird die Elektrodenanordnung 7 als Feldkäfig geschaltet, so dass der Partikel 2 anschließend im fixierten Zustand in der Elektrodenanordnung 7 durch eine zweite Messstation 9 untersucht werden kann, wobei die zweite Messstation 9 eine detaillierte Untersuchung des Partikels 2 vornimmt, wie bereits eingangs beschrieben wurde. Entsprechend dem Ergebnis der Messung an Messstation 9 kann die Elektrodenanordnung 7 anschließend als Switch geschaltet (siehe Fig. 10 und zugehörige Beschreibung) und der Partikel in eine der Ausgangsleitungen 5 (negativ), 6 (positiv) überführt werden.

Weiterhin ist in der Ausgangsleitung 6 für positiv selektierte Partikel 2 eine Elektrodenanordnung 10 angeordnet, welche die Partikel 2 in der Ausgangsleitung 6 zentriert und dadurch ein Absinken der Partikel 2 in der Ausgangsleitung 6 verhindert.

Schließlich ist noch zu erwähnen, dass in die Ausgangsleitung 6 zwei Hüllstromleitungen 11, 12 münden, was an sich ebenfalls bekannt ist.

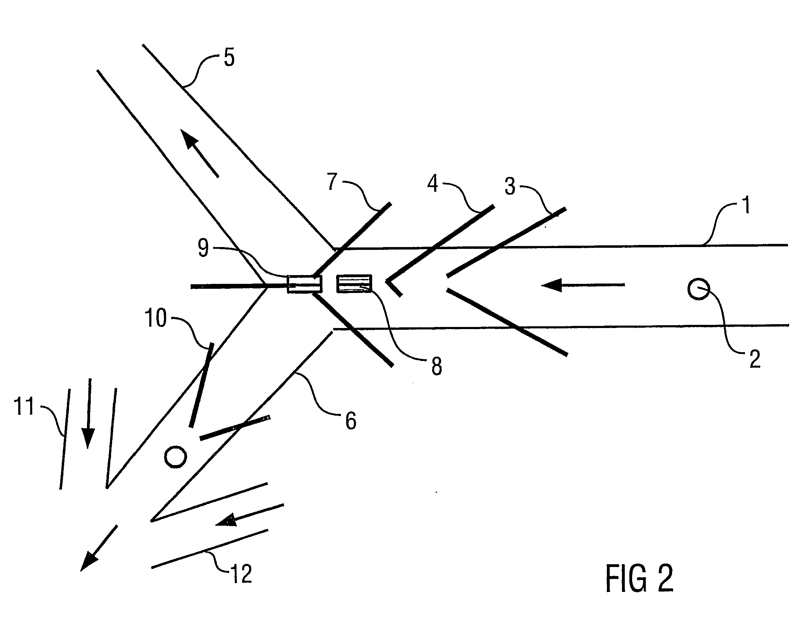

Das in Figur 2 dargestellte alternative Ausführungsbeispiel stimmt weitgehend mit dem vorstehend beschriebenen und in Figur 1 dargestellten Ausführungsbeispiel überein, so dass zur Vermeidung von Wiederholungen auf die vorstehende Beschreibung verwiesen wird, wobei für entsprechende Bauteile dieselben Bezugszeichen verwendet werden.

Eine Besonderheit dieses Ausführungsbeispiels besteht darin, dass die Elektrodenanordnung 7 hierbei lediglich sechs räumlich angeordnete Elektroden aufweist, die jedoch ebenfalls wahlweise als Feldkäfig oder als Partikelweiche schaltbar sind.

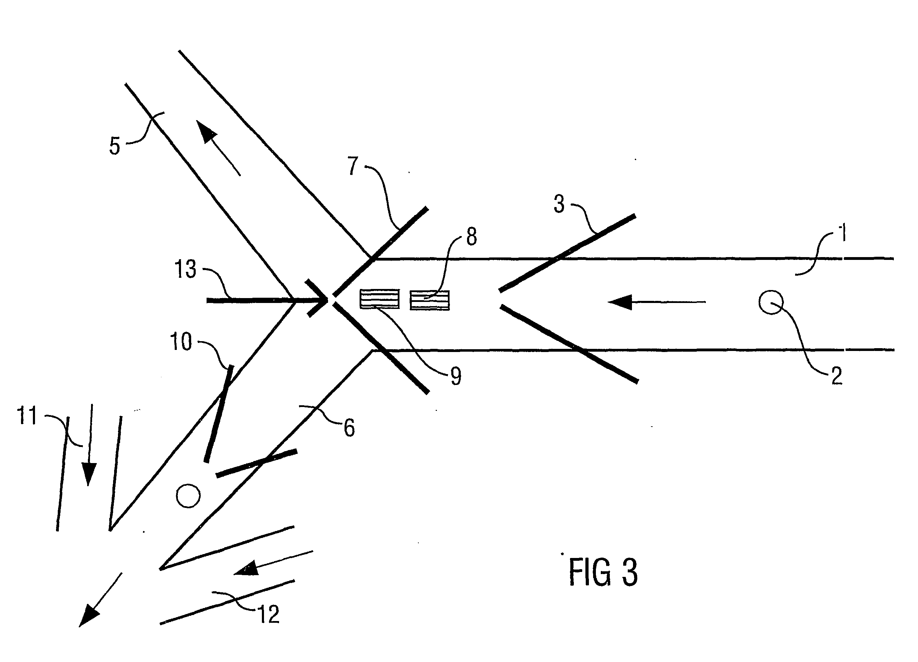

Schließlich stimmt auch das in Figur 3 dargestellte alternative Ausführungsbeispiel weitgehend mit dem vorstehend beschriebenen und in Figur 1 dargestellten Ausführungsbeispiel überein, so dass zur Vermeidung von Wiederholungen weitgehend auf die vorstehende Beschreibung zu Figur 1 verwiesen wird, wobei für entsprechende Bauteile im Folgenden dieselben Bezugszeichen verwendet werden.

Eine Besonderheit dieses Ausführungsbeispiels besteht darin, dass die Elektrodenanordnung 7 hierbei eine Pfeilelektrode 13 aufweist, die entgegen der Strömungsrichtung ausgerichtet ist und permanent angesteuert wird, wobei an die Pfeilelektrode 13 zwei Ablenkelektroden angrenzen, die zur Ablenkung in die gewünschte Ausgangsleitung 5 bzw. 6 jeweils einzeln angesteuert werden. Diese Konfiguration wird auch als "Ultra Fast Sorter" (UFS) bezeichnet und ermöglicht eine schnelle Sortierung der suspendierten Partikel 2.

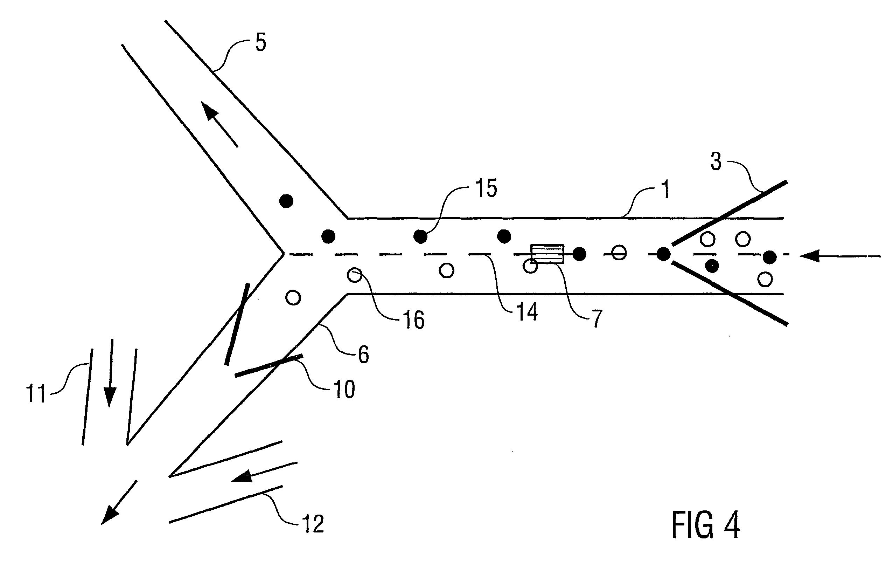

Das in Figur 4 dargestellte Beispiel stimmt teilweise mit den vorstehend beschriebenen Ausführungsbeispielen überein, so dass zur Vermeidung von Wiederholungen weitgehend auf die vorstehende Beschreibung verwiesen wird, wobei für entsprechende Bauteile dieselben Bezugszeichen verwendet werden und nur die Besonderheiten dieses Ausführungsbeispiels beschrieben werden.

Eine Besonderheit dieses Beispiels besteht darin, dass die Elektrodenanordnung 7 in dem Trägerstromkanal 1 stromaufwärts vor dem Verzweigungsbereich der beiden Ausgangsleitungen 5, 6 angeordnet ist. In dem Trägerstromkanal 1 verläuft hierbei mittig eine flächige Trennlinie 14, wobei in der Zeichnung schwarz dargestellte Partikel 15 in die Ausgangsleitung 5 für negativ selektierte Partikel strömen, wohingegen in der Zeichnung in einer Umrisslinie dargestellte Partikel 16 in die andere Ausgangsleitung 6 für positiv selektierte Partikel strömen. Die Trennlinie 14 wird auch als Separatrix bezeichnet und trennt in dem Trägerstromkanal 1 zwei Teilströme, die ohne eine Ansteuerung der Elektrodenanordnung 7 als Partikelweiche in die jeweils zugehörige obere bzw. untere Ausgangsleitung 5 bzw. 6 strömen. Zur Erreichung einer definierten Sortierung der Partikel 15, 16 auf die beiden Ausgangsleitungen 5, 6 muss die gemeinsame Elektrodenanordnung 7 also hierbei stets als Partikelweiche aktiv angesteuert werden.

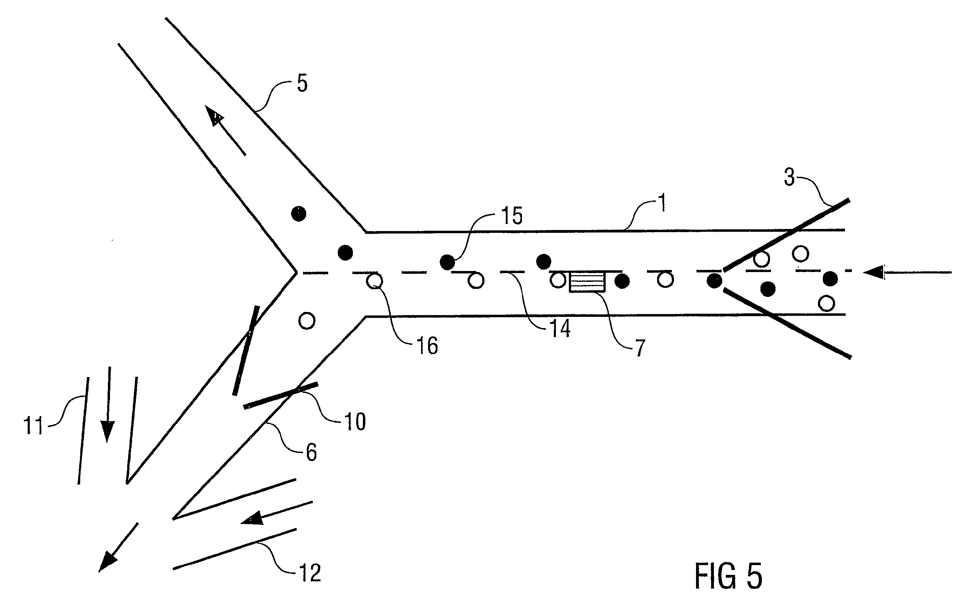

Das in Figur 5 dargestellte alternative Ausführungsbeispiel eines mikrofluidischen Systems stimmt teilweise mit dem vorstehend beschriebenen und in Figur 4 dargestellten Beispiel überein, so dass weitgehend auf die vorstehende Beschreibung verwiesen wird und im Folgenden für entsprechende Bauteile die selben Bezugszeichen verwendet werden.

Eine Besonderheit dieses Ausführungsbeispiels besteht darin, dass die wahlweise als Partikelweiche oder als Feldkäfig ansteuerbare gemeinsame Elektrodenanordnung 7 in dem Trägerstromkanal 1 außermittig angeordnet ist. Dies bedeutet, dass sich die Elektrodenanordnung 7 bezüglich der Strömungsrichtung in dem Trägerstromkanal 1 seitlich neben der Trennlinie 14 auf der Seite der Ausgangsleitung 6 befindet. Dies bedeutet, dass die Partikel 15, 16 selbständig in die Ausgangsleitung 6 strömen, wenn die Elektrodenanordnung 7 nicht aktiv als Partikelweiche angesteuert wird, um die Partikel 15 über die Trennlinie 14 hinaus auf die andere Seite des Trägerstromkanals 1 abzulenken. Dieses Ausführungsbeispiel ist deshalb dann vorteilhaft, wenn der Anteil der negativ zu selektierenden Partikel 15 wesentlich kleiner ist als der Anteil der positiv zu selektierenden Partikel 16, da nur zum Aussortieren der relativ geringen Anzahl der negativ zu selektierenden Partikel 15 eine Ansteuerung der Elektrodenanordnung 7 erforderlich ist.

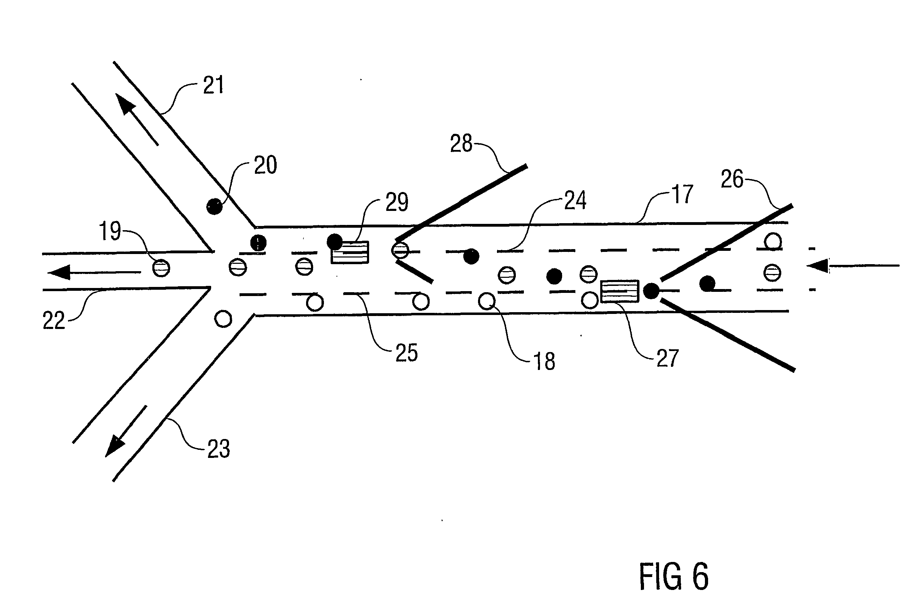

Figur 6 zeigt ein weiteres Ausführungsbeispiel eines mikrofluidischen Systems mit einem Trägerstromkanal 17 zur Zuführung eines Trägerstroms mit darin suspendierten Partikeln 18, 19, 20, wobei sich die Partikel 18, 19, 20 unterscheiden, was in der Zeichnung durch die unterschiedliche grafische Darstellung der Partikel 18, 19, 20 angedeutet ist.

Der Trägerstromkanal 17 verzweigt stromabwärts in drei Ausgangsleitungen 21, 22, 23 zur Aufnahme und Abführung der verschiedenen Partikel 18, 19, 20. Die Ausgangsleitung 21 dient hierbei zur Aufnahme der schwarz gezeichneten Partikel 20, während die Ausgangsleitung 22 zur Abführung der schraffiert dargestellten Partikel 19 dient, wohingegen die Ausgangsleitung 23 die als Umrisslinie gezeichneten Partikel 18 aufnimmt und abführt.

In dem Trägerstromkanal 17 verlaufen hierbei zwei (gedachte) Trennflächen bzw. flächige Trennlinien 24, 25, die in dem Trägerstromkanal 17 drei Teilströme abgrenzen und in der dargestellten Aufsicht die Trennlinien 24, 25 bilden.

Die in dem oberen Teilstrom oberhalb der Trennlinie 24 suspendierten Partikel gelangen hierbei selbständig in die Ausgangsleitung 21, sofern diese Partikel nicht aktiv abgelenkt werden, wie im Folgenden noch detailliert beschrieben wird.

Die Partikel, die in dem Trägerstrom zwischen den beiden Trennlinien 24, 25 suspendiert sind, gelangen dagegen ohne eine externe Ablenkung selbständig in die Ausgangsleitung 22.

Ferner strömen die in dem Trägerstrom unterhalb der Trennlinie 25 suspendierten Partikel selbständig in die Ausgangsleitung 23, sofern diese Partikel nicht aktiv abgelenkt werden, wie noch detailliert beschrieben wird.

In dem Trägerstromkanal 17 befindet sich stromaufwärts zunächst eine Zentriereinrichtung 26, welche die in dem Trägerstrom suspendierten Partikel 18, 19, 20 auf der Trennlinie 25 aufreiht und einer nachfolgenden Elektrodenanordnung 27 zuführt. Die Elektrodenanordnung 27 vereinigt die Funktion eines Feldkäfigs mit der Funktion einer Ablenkeinrichtung (engl. "switch").

Bei einer Ansteuerung als Feldkäfig kann die Elektrodenanordnung 27 die Partikel 18, 19 bzw. 20 fixieren, damit die Partikel 18, 19 bzw. 20 von einer Messstation untersucht werden, die zur Vereinfachung nicht dargestellt ist.

Bei einer Ansteuerung als Partikelweiche bzw. Ablenkeinrichtung kann die Elektrodenanordnung 27 die Partikel 18, 19 bzw. 20 dagegen in Abhängigkeit von dem Ergebnis der vorangegangenen Untersuchung in der Messstation entweder geradeaus weiter strömen lassen oder seitlich in den Teilstrom zwischen den beiden Trennlinien 24, 25 ablenken.

Stromabwärts hinter der Elektrodenanordnung 27 befindet sich eine weitere Zentriereinrichtung 28, die in dem Trägerstromkanal 17 außermittig angeordnet ist und die in den beiden Teilströmen beiderseits der Trennlinie 24 suspendierten Partikel auf der Trennlinie 24 aufreiht und einer weiteren Elektrodenanordnung 29 zuführt, die wahlweise als Feldkäfig oder als Partikelweiche ansteuerbar ist.

Bei einer Ansteuerung der Elektrodenanordnung 29 als Feldkäfig kann die Elektrodenanordnung 29 die Partikel 19 bzw. 20 fixieren, damit diese durch eine Messstation untersucht werden können, die zur Vereinfachung nicht dargestellt ist.

Bei einer Ansteuerung als Partikelweiche kann die Elektrodenanordnung die Partikel wahlweise in den oberhalb der Trennlinie 24 befindlichen Teilstrom oder in den unterhalb der Trennlinie 24 befindlichen Teilstrom ablenken, damit die Partikel in die gewünschte Ausgangsleitung 21 bzw. 22 strömen. Die Ansteuerung der Elektrodenanordnung 29 als Partikelweiche zur Sortierung der Partikel auf die beiden Ausgangsleitungen 21, 22 erfolgt hierbei in Abhängigkeit von dem Ergebnis der vorangegangenen Untersuchung der nicht dargestellten Messstation.

Die Elektrodenanordnungen 27, 29 können wie in Figur 9 in einer alternativen Ausführung zusätzlich die Funktion der Zentriereinrichtung 26, 28 übernehmen, womit diese vorgelagerten Elemente entfallen können.

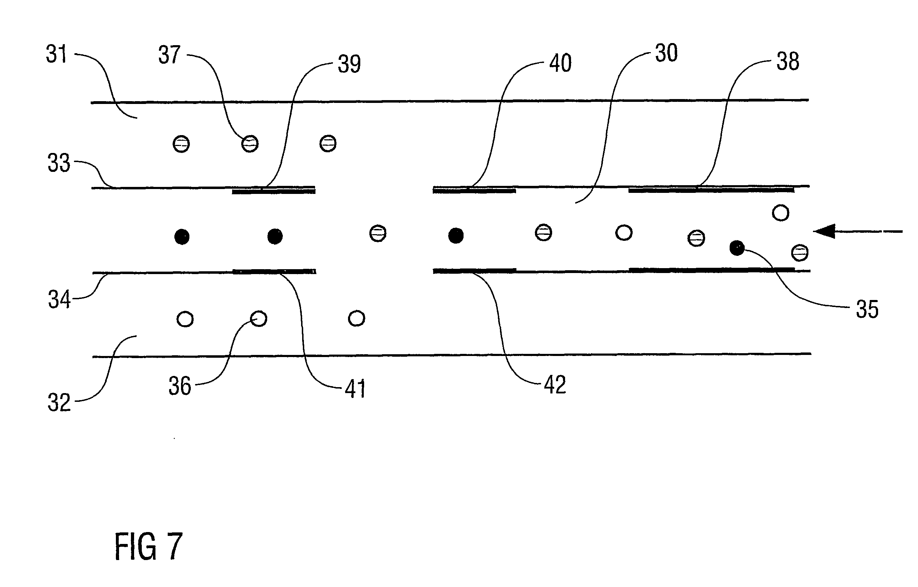

Figur 7 zeigt in einer Seitenansicht ein weiteres Ausführungsbeispiel eines nicht erfindungsgemäßen mikrofluidischen Systems mit einem Trägerstromkanal 30 und zwei benachbarten Nebenstromkanälen 31, 32, wobei die beiden Nebenstromkanäle 31, 32 von dem Trägerstromkanal 30 durch jeweils eine Trennwand 33, 34 getrennt sind.

Über den Trägerstromkanal 30 werden dem mikrofluidischen System hierbei suspendierte Partikel 35, 36, 37 zugeführt, wobei sich die Partikel 35, 36, 37 unterscheiden und entsprechend auf die beiden Nebenstromkanäle 31, 32 oder auf den weiterführenden Trägerstromkanal 30 verteilt werden.

In dem Trägerstromkanal 30 befindet sich an dessen stromaufwärts gelegenen Ende zunächst eine Elektrodenanordnung 38, um die Partikel 35, 36, 37 in dem Trägerstromkanal 30 mittig aufzureihen.

Stromabwärts hinter der Elektrodenanordnung 38 weisen die Trennwände 33, 34 jeweils einen Durchbruch auf, durch den die Partikel 36, 37 in die benachbarten Nebenstromkanäle 31, 32 abgelenkt werden können. Hierzu ist im Bereich der Durchbrüche eine Elektrodenanordnung angeordnet, die wahlweise als Feldkäfig oder als Partikelweiche ansteuerbar ist, wobei die gemeinsame Elektrodenanordnung aus acht Elektroden besteht, von denen hier nur vier Elektroden 39, 40, 41, 42 erkennbar sind.

Bei einer Ansteuerung der gemeinsamen Elektrodenanordnung als Feldkäfig können die Partikel 35, 36 bzw. 37 in dem Feldkäfig fixiert werden, um eine detaillierte Untersuchung durch eine Messstation zu ermöglichen, die zur Vereinfachung nicht dargestellt ist.

In Abhängigkeit von dem Ergebnis dieser Untersuchung kann die gemeinsame Elektrodenanordnung dann als Partikelweiche angesteuert werden, um die Partikel 37 in den Nebenstromkanal 31 zu befördern und die Partikel 36 in den Nebenstromkanal 32 abzulenken.

Außerdem können wie in Figur 1 beschrieben die Partikel durch die Acht-Elektrodenanordnung auch in verschiedene Strömungspfade (in der gezeigten Ebene sowie davor bzw. dahinter) der Kanäle 30,31 und 32 gelenkt und damit bis zu 9 verschiedene fluidische Ausgänge (zur Fraktionierung) adressiert werden.

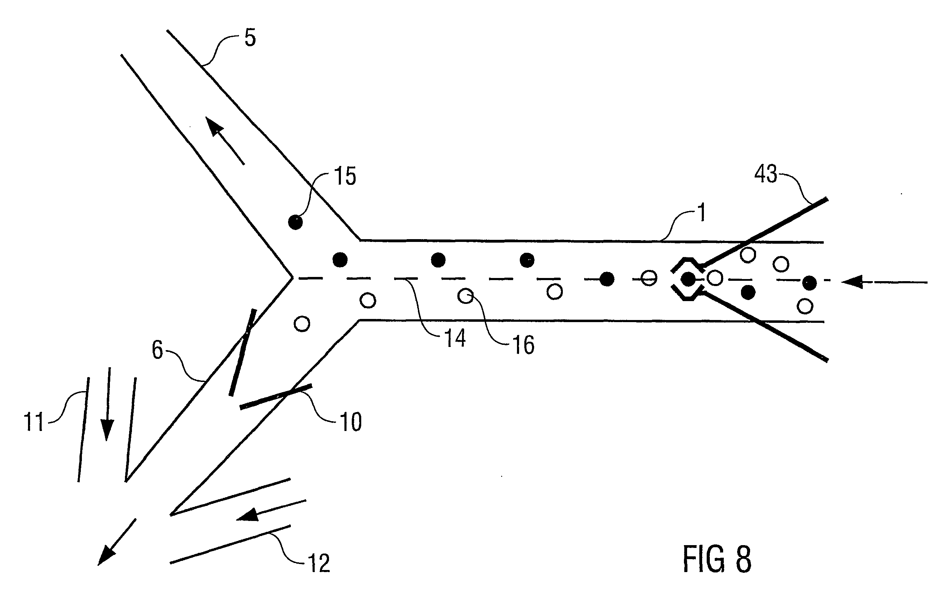

Das in Figur 8 dargestellte Beispiel einer im Zusammenhang mit der Erfindung verwendbaren gemeinsamen Elektrodenanordnung, welche die Funktion eines Feldkäfigs und einer Zentriereinheit integriert, stimmt weitgehend mit dem vorstehend beschriebenen und in Figur 4 dargestellten Beispiel überein, so dass zur Vermeidung von Wiederholungen weitgehend auf die vorstehende Beschreibung verwiesen wird und für entsprechende Bauteile die selben Bezugszeichen verwendet werden.

Eine Besonderheit dieses Beispiels besteht darin, dass die Funktionen der Elektrodenanordnungen 3 und 7 in Figur 4 bei diesem Beispiel in einer einzigen Elektrodenanordnung 43 integriert sind, wobei die Elektrodenanordnung 43 wahlweise als Zentriereinrichtung (engl. "funnel"), als Feldkäfig (engl. "field cage") oder als Partikelweiche (engl. "switch") ansteuerbar ist.

Die Elektrodenanordnung 43 weist hierbei Elektroden auf, die in Strömungsrichtung aufeinander zulaufen, wobei die Endspitzen dieser Elektroden konvex, z.B. halbkreisförmig geformt sind. Mit Hilfe dieser besonderen Gestaltung kann die Elektrodenanordnung 43 auch Partikel haltern.

Ferner zeigt Figur 9 eine schematische Darstellung einer gemeinsamen Elektrodenanordnung, die wahlweise als Zentriereinrichtung oder als Feldkäfig ansteuerbar ist. Hierzu weist die Elektrodenanordnung acht quaderförmig angeordnete Käfigelektroden auf, wobei in der Aufsicht nur vier Käfigelektroden 44, 45, 46, 47 erkennbar sind.

Weiterhin sind hierbei vier herkömmlich angeordnete Ablenkelektroden vorgesehen, wobei in der Aufsicht nur zwei Ablenkelektroden 48, 49 erkennbar sind.

Die stromaufwärts gelegenen Käfigelektroden 45, 47 sind hierbei mit jeweils einer der beiden Ablenkelektroden 48, 49 elektrisch verbunden und gemeinsam mit diesen ansteuerbar.

Potentielle Ansteuermöglichkeiten für die in Figur 9 dargestellte Elektrodenanordnung, insbesondere Rot, AC I und AC II Modus, sind in Tabelle 1 aufgeführt.

Rot und AC I Modus eignen sich sowohl zum Fangen der Partikel im Feldkäfig, als auch zum Aufreihen der Partikel. Wobei der Rot-Modus den Vorteil hat, dass er das Eintreten der Partikel in den Käfig wesentlich effektiver verhindert als der AC I Modus.

In einer alternativen Ausführung der in Figur 9 dargestellten Elektrodenanordnung ist eine(s) der Elektroden(paare) 49, bzw. 48 an der stromabwärtsliegenden Spitze verlängert und als Haken (hook) über die Zentrallinie ausgeführt. Das andere Elektrodenpaar ist stromaufwärts versetzt oder kann in einer weiteren möglichen Ausführungsform auch entfallen. Damit lässt sich zusätzlich in den Modi Rot und AC I ein Zwischenspeichern der Partikel vor dem eigentlichen Käfig realisieren.

Der AC II Modus zeichnet sich durch ein besonders stabiles Halten (ohne Rotation) der Partikel aus und ist damit für hochauflösende Messungen besonders geeignet.

Um in diesem Modus ein Vorhalten der Partikel zu Realisieren ist folgende Anordnung zu verwenden: Je eine Elektrode des beschriebenen Paars Elektroden (48, 49) ist in verschiedenen Ebenen hakenförmigen verlängert ausgeführt. Damit wird in den Modi Rot und AC II eine Hakenfunktion sichergestellt. Falls auf die Aufreihfunktion verzichtet werden kann, so ist in dieser Ausführungsform die kürzere gerade Gegenelektrode (48,49) entbehrlich.

Schließlich zeigt Figur 10 eine schematische Darstellung der geometrischen Anordnung von acht Käfigelektroden 50, 50', 51, 51', 52, 52', 53, 53', wobei die Strömungsrichtung hierbei in Y-Richtung verläuft.

Die elektrische Ansteuerung der einzelnen-Käfigelektroden 50, 50', 51, 51', 52, 52', 53, 53' ist beispielsweise in der bereits eingangs erwähnten Veröffentlichung von MÜLLER, T. et al.: "A 3-D microelectrode system for handling and caging single cells and particles" beschrieben, deren Inhalt der vorliegenden Beschreibung in vollem Umfang zuzurechnen ist. Um einen gefangenen Partikel in Y-Richtung zu entlassen, werden die Käfigelektroden 52, 52', 53, 53' hinreichen geschwächt, was beispielsweise durch Ausschalten dieser Käfigelektroden erfolgen kann. Analoges gilt für die X- bzw. Y-Richtung. Eine Schwächung der Elektroden 52, 52' führt zu einem Entweichen des gefangenen Partikels in XY-Richtung (1,1,0-Richtung). Wird dagegen nur die Elektrode 52' geschwächt, so verlässt der gefangene Partikel den Feldkäfig in 1,1,1-Richtung. Ein besonders schnelles Partikelentweichen (Katapultmodus) kann dadurch erreicht werden, dass an mindestens einer weiteren Elektrode (z.B. der gegenüberliegenden Elektrode) die Spannung erhöht und/oder die Phasenlage geändert wird.

In analoger Weise kann ein Partikel auch in definierter Weise in den Käfig hereingelassen werden, bzw. definierte Trajektorien durchlaufen, womit sich auch Weichenfunktionen des Käfigs realisieren lassen. Exemplarisch wird dieses im Folgenden beschrieben. Die aus MÜLLER, T. et al.: "A 3-D microelectrode system for handling and caging single cells and particles", bekannten Ansteuerarten umfassen Rotations- und AC-Feld-Modi, welche in Tabelle 1 mit Bezug auf die Elektrodenbezeichnungen in Figur 10 wiedergegeben sind. Diese Modi können Partikel im Käfig fangen und in definierte Richtung entlassen, wie oben beschrieben. Desweiteren werden exemplarisch Weichenmodi angegeben, die Partikel, die aus der y-Richtung anströmen, in die xy-Richtung bzw. xy-Richtung auslenken.

**Tabelle 1: Beispielhafte Phasenlagen für Ansteuermodi eines Oktodenfeldkäfigs**

| | 50 | 51 | 52 | 53 | 50' | 51' | 52' | 53' |
|---|---|---|---|---|---|---|---|---|
| Rot | 0° | 90° | 180° | 270° | 180° | 270° | 0° | 90° |
| AC I | 0° | 180° | 0° | 180° | 180° | 0° | 180° | 0° |
| AC II | 0° | 180° | 0° | 180° | 0° | 180° | 0° | 180° |
| Weiche in | 0° | ground | 90° | ground | 270° | ground | 180° | ground |
| (1,1,0) | | | | | | | | |
| Weiche in | Ground | 0° | ground | 90° | ground | 270° | ground | 180° |
| (-1,1,0) | | | | | | | | |

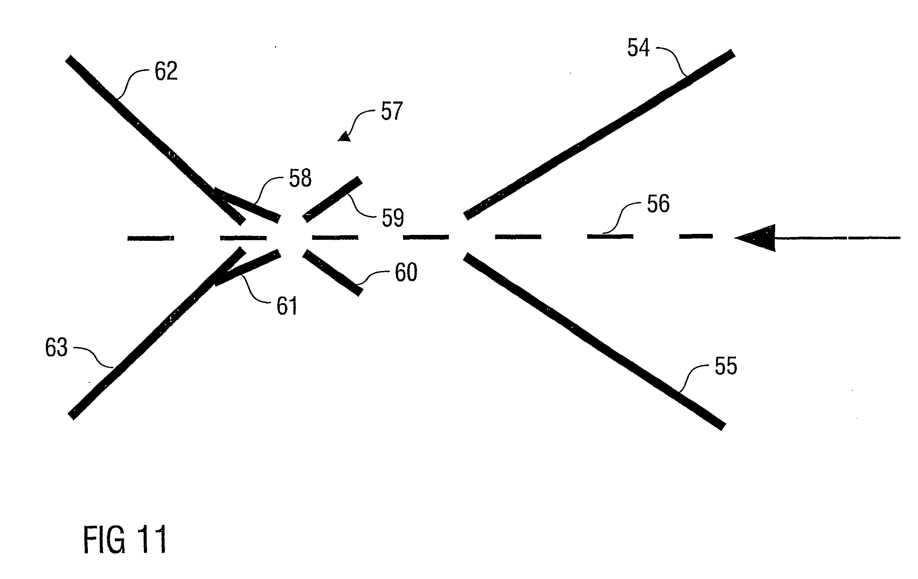

Schließlich zeigt Figur 11 ein weiteres Ausführungsbeispiel eines erfindungsgemäßen mikrofluidischen Systems, wobei in Pfeilrichtung ein Trägerstrom mit darin suspendierten Partikel strömt.

Im stromaufwärts gelegenen Bereich des mikrofluidischen Systems sind zunächst mehrere trichterförmig angeordnetren Elektroden 54, 55 angeordnet, welche die in dem Trägerstrom suspendierten Partikel auf einer Mittellinie 56 zentrieren.

Stromabwärts hinter den Elektroden 54, 55 befindet sich eine Elektrodenanordnung 57, die zum Fangen der Partikel und zum schnellen Schalten in zwei Strömungspfade dient. Die Elektrodenanordnung 57 weist an ihrem stromaufwärts gelegenen Ende einen Feldkäfig auf, der aus mehreren Elektroden 58-61 besteht. Weiterhin weist die Elektrodenanordnung 57 beiderseits der Mittellinie 56 mehrere Ablenkelektroden 62, 63 auf, welche die Partikel bei einer entsprechenden Ansteuerung in einen von zwei Strömungspfaden ablenken. Die Ablenkelektroden 62, 63 sind hierbei galvanisch mit den Elektroden 58, 61 des Feldkäfigs verbunden.

### Bezugszeichenliste:

- 1: Trägerstromkanal
- 2: Partikel
- 3: Elektrodenanordnung
- 4: Elektrodenanordnung
- 5: Ausgangsleitung
- 6: Ausgangsleitung
- 7: Elektrodenanordnung
- 8: Messstation
- 9: Messstation
- 10: Elektrodenanordnung
- 11: Hüllstromleitung
- 12: Hüllstromleitung
- 13: Pfeilelektrode
- 14: Trennlinie
- 15: Partikel
- 16: Partikel
- 17: Trägerstromkanal
- 18: Partikel
- 19: Partikel
- 20: Partikel
- 21: Ausgangsleitung
- 22: Ausgangsleitung
- 23: Ausgangsleitung
- 24: Trennlinie
- 25: Trennlinie
- 26: Zentriereinrichtung
- 27: Elektrodenanordnung
- 28: Zentriereinrichtung
- 29: Elektrodenanordnung
- 30: Trägerstromkanal
- 31: Nebenstromkanal
- 32: Nebenstromkanal
- 33: Trennwand
- 34: Trennwand
- 35: Partikel
- 36: Partikel
- 37: Partikel
- 38: Elektrodneanordnung
- 39: Elektrode
- 40: Elektrode
- 41: Elektrode
- 42: Elektrode
- 43: Elektrodenanordnung
- 44: Käfigelektrode
- 45: Käfigelektrode
- 46: Käfigelektrode
- 47: Käfigelektrode
- 48: Ablenkelektrode
- 49: Ablenkelektrode
- 50, 50': Käfigelektrode
- 51, 51': Käfigelektrode
- 52, 52': Käfigelektrode
- 53, 53': Käfigelektrode
- 54, 55: Elektroden
- 56: Mittellinie
- 57: Elektrodenanordnung
- 58-61: Elektroden
- 62, 63: Ablenkelektroden

## Patentansprüche

1. Mikrofluidisches System, insbesondere in einem Partikelsortierer, mit
a) mindestens einem Trägerstromkanal (1) zur Zuführung eines Trägerstroms mit darin suspendierten Partikeln (2),
b) mehreren Ausgangsleitungen (5, 6),
c) einem Verzweigungsbereich, in dem der Trägerstromkanal (1) in die Ausgangsleitungen (5, 6) verzweigt,
d) einer in dem Trägerstromkanal (1) angeordneten ersten Manipulationseinrichtung zur Manipulation der in dem Trägerstrom suspendierten Partikel (2), wobei die erste Manipulationseinrichtung ein Feldkäfig ist, der die Partikel (2) fixiert,
e) einer in dem Trägerstromkanal (1) angeordneten zweiten Manipulationseinrichtung zur Manipulation der in dem Trägerstrom suspendierten Partikel (2), wobei die zweite Manipulationseinrichtung eine Partikelweiche ist, welche die in dem Trägerstrom suspendierten Partikel (2) in eine der Ausgangsleitungen (5, 6) sortiert,
**dadurch gekennzeichnet, dass**
f) die erste Manipulationseinrichtung und die zweite Manipulationseinrichtung eine gemeinsame Elektrodenanordnung (7) aufweisen und
g) dass die gemeinsame Elektrodenanordnung (7) in dem Verzweigungsbereich angeordnet ist.

2. Mikrofluidisches System nach Anspruch 1, **dadurch gekennzeichnet, dass** die gemeinsame Elektrodenanordnung zusätzlich eine dritte Manipulationseinrichtung bildet.

3. Mikrofluidisches System nach einem der vorhergehenden Ansprüche, **dadurch gekennzeichnet, dass** die gemeinsame Elektrodenanordnung (7) mindestens eine Elektrode aufweist, die sowohl Bestandteil der ersten Manipulationseinrichtung als auch Bestandteil der zweiten Manipulationseinrichtung ist.

4. Mikrofluidisches System nach einem der Ansprüche 2 bis 3, **dadurch gekennzeichnet, dass** die dritte Manipulationseinrichtung eine Zentriereinrichtung ist, welche die Partikel in dem Trägerstromkanal zentriert.

5. Mikrofluidisches System nach einem der vorhergehenden Ansprüche, **dadurch gekennzeichnet,**
a) **dass** die Elektrodenanordnung (7) mindestens eine pfeilförmige Elektrode (13) und mehrere Ablenkelektroden aufweist,
b) **dass** die pfeilförmige Elektrode (13) entgegen der Strömungsrichtung des Trägerstroms ausgerichtet ist,
c) **dass** die Ablenkelektroden stromaufwärts vor der pfeilförmigen Elektrode (13) angeordnet sind und an die pfeilförmige Elektrode (13) angrenzen.

6. Mikrofluidisches System nach einem der vorhergehenden Ansprüche, **dadurch gekennzeichnet, dass** die Elektrodenanordnung (7) vier, sechs oder acht getrennt ansteuerbare Elektroden aufweist.

7. Mikrofluidisches System nach einem der vorhergehenden Ansprüche, **dadurch gekennzeichnet, dass** der Feldkäfig acht Elektroden (44-47) aufweist, während die Zentriereinheit (48, 49) vier Elektroden aufweist, wobei die vier stromaufwärts gelegenen Elektroden (45, 46) des Feldkäfigs elektrisch mit jeweils einer der Elektroden (48, 49) der Zentriereinheit verbunden sind.

8. Mikrofluidisches System nach einem der vorhergehenden Ansprüche, **gekennzeichnet durch** eine erste Messstation (8), welche die in dem Trägerstrom suspendierten Partikel (2) stromaufwärts vor der gemeinsamen Elektrodenanordnung (7) im strömenden Zustand untersucht.

9. Mikrofluidisches System nach einem der vorhergehenden Ansprüche, **gekennzeichnet durch** eine zweite Messstation (9), welche die in dem Feldkäfig fixierten Partikel (2) untersucht.

10. Mikrofluidisches System nach einem der vorhergehenden Ansprüche, **gekennzeichnet durch** eine Steuereinheit zur Ansteuerung der gemeinsamen Elektrodenanordnung, wobei die Steuereinheit eingangsseitig mit der ersten Messstation und/oder der zweiten Messstation verbunden ist und die gemeinsame Elektrodenanordnung in Abhängigkeit von der Untersuchung in der ersten Messstation und/oder der zweiten Messstation ansteuert.

11. Partikelsortierer mit einem mikrofluidischen System nach einem der vorhergehenden Ansprüche.

12. Ansteuerungsverfahren für eine Elektrodenanordnung (7), die in einem Trägerstromkanal (1) eines mikrofluidischen Systems angeordnet ist, wobei in dem Trägerstromkanal (1) ein Trägerstrom mit darin suspendierten Partikeln (2) strömt, mit den folgenden Schritten:
a) Elektrische Ansteuerung der Elektrodenanordnung (7), so dass die in dem Trägerstrom suspendierten Partikel (2) von der Elektrodenanordnung (7) einer ersten Manipulation unterzogen werden, wobei die erste Manipulation eine Fixierung der suspendierten Partikel (2) umfasst,
b) Ansteuerung der Elektrodenanordnung (7) wahlweise zur Durchführung der ersten Manipulation an den Partikeln (2) oder zur Durchführung einer zweiten Manipulation an den Partikeln (2),
**dadurch gekennzeichnet,**
c) **dass** die zweite Manipulation eine Sortierung der suspendierten Partikel (2) umfasst und
d) **dass** die gemeinsame Elektrodenanordnung (7) in einem Verzweigungsbereich angeordnet ist, in dem der Trägerstromkanal (1) in die Ausgangsleitungen (5, 6) verzweigt.

13. Ansteuerungsverfahren nach Anspruch 12, **dadurch gekennzeichnet, dass** die in dem Trägerstrom suspendierten Partikel (2) untersucht werden.

14. Ansteuerungsverfahren nach Anspruch 13, **dadurch gekennzeichnet, dass** die Elektrodenanordnung (7) in Abhängigkeit von der Untersuchung der Partikel (2) zur Durchführung der ersten Manipulation und/oder der zweiten Manipulation angesteuert wird.

15. Verwendung eines mikrofluidischen Systems nach einem der Ansprüche 1 bis 10 zur Untersuchung und/oder Sortierung von Partikeln, insbesondere von biologischen Zellen.

## Claims

1. Microfluidic system, in particular in a particle sorter, having
a) at least one carrier flow channel (1) for supplying a carrier flow with particles (2) suspended therein,
b) a plurality of outlet lines (5, 6),
c) a branching region, in which the carrier flow channel (1) branches into the outlet lines (5, 6),
d) a first manipulation device disposed in the carrier flow channel (1) for manipulation of the particles (2) suspended in the carrier flow, the first manipulation device being a field cage which fixes the particles (2),
e) a second manipulation device disposed in the carrier flow channel (1) for manipulation of the particles (2) suspended in the carrier flow, the second manipulation device being a particle switch which sorts the particles (2) suspended in the carrier flow into one of the outlet lines (5, 6),
**characterised in that**
f) the first manipulation device and the second manipulation device have a common electrode arrangement (7) and
g) **in that** the common electrode arrangement (7) is disposed in the branching region.

2. Microfluidic system according to claim 1, **characterised in that** the common electrode arrangement forms in addition a third manipulation device.

3. Microfluidic system according to one of the preceding claims, **characterised in that** the common electrode arrangement (7) has at least one electrode which is both a component of the first manipulation device and a component of the second manipulation device.

4. Microfluidic system according to one of the claims 2 to 3, **characterised in that** the third manipulation device is a centring device which centres the particles in the carrier flow channel.

5. Microfluidic system according to one of the preceding claims, **characterised in that**
a) the electrode arrangement (7) has at least one arrow-shaped electrode (13) and a plurality of deflection electrodes,
b) **in that** the arrow-shaped electrode (13) is orientated counter to the flow direction of the carrier flow,
c) **in that** the deflection electrodes are disposed upstream in front of the arrow-shaped electrode (13) and abut against the arrow-shaped electrode (13).

6. Microfluidic system according to one of the preceding claims, **characterised in that** the electrode arrangement (7) has four, six or eight separately actuatable electrodes.

7. Microfluidic system according to one of the preceding claims, **characterised in that** the field cage has eight electrodes (44 - 47), whilst the centring unit (48, 49) has four electrodes, the four electrodes (45, 46) of the field cage, positioned upstream, being connected electrically to respectively one of the electrodes (48, 49) of the centring unit.

8. Microfluidic system according to one of the preceding claims, **characterised by** a first measuring station (8) which examines the particles (2) suspended in the carrier flow upstream in front of the common electrode arrangement (7) in the flowing state.

9. Microfluidic system according to one of the preceding claims, **characterised by** a second measuring station (9) which examines the particles (2) fixed in the field cage.

10. Microfluidic system according to one of the preceding claims, **characterised by** a control unit for actuating the common electrode arrangement, the control unit being connected on the input side to the first measuring station and/or to the second measuring station, and the common electrode arrangement being actuated as a function of the examination in the first measuring station and/or in the second measuring station.

11. Particle sorter having a microfluidic system according to one of the preceding claims.

12. Actuation method for an electrode arrangement (7) which is disposed in a carrier flow channel (1) of a microfluidic system, a carrier flow with particles (2) suspended therein flowing in the carrier flow channel (1), having the following steps:
a) electrical actuation of the electrode arrangement (7) so that the particles (2) suspended in the carrier flow are subjected to a first manipulation by the electrode arrangement (7), the first manipulation comprising fixing the suspended particles (2),
b) actuation of the electrode arrangement (7) optionally for implementing the first manipulation on the particles (2) or for implementing a second manipulation on the particles (2),
**characterised in that**
c) the second manipulation comprises sorting the suspended particles (2) and
d) **in that** the common electrode arrangement (7) is disposed in a branching region in which the carrier flow channel (1) branches into the outlet lines (5, 6).

13. Actuation method according to claim 12, **characterised in that** the particles (2) suspended in the carrier flow are examined.

14. Actuation method according to claim 13, **characterised in that** the electrode arrangement (7) is actuated as a function of the examination of the particles (2) in order to implement the first manipulation and/or the second manipulation.

15. Use of a microfluidic system according to one of the claims 1 to 10 for examining and/or sorting particles, in particular biological cells.

## Revendications

1. Système microfluidique, particulièrement dans un trieur de particules, comprenant
a) au moins un canal de courant porteur (1) pour transporter un courant porteur avec des particules (2) en suspension dans celui-ci,
b) plusieurs lignes de sortie (5, 6),
c) une zone de bifurcation dans laquelle le canal de courant porteur (1) bifurque dans les lignes de sortie (5, 6),
d) un premier dispositif de manipulation disposé dans le canal de courant porteur (1) pour la manipulation des particules (2) en suspension dans le courant porteur, le premier dispositif de manipulation étant une cage de champs qui fixe les particules (2),
e) un deuxième dispositif de manipulation disposé dans le canal de courant porteur (1) pour la manipulation des particules (2) en suspension dans le courant porteur, le deuxième dispositif de manipulation étant un trieur de particules qui trie les particules (2) en suspension dans le courant porteur vers une des lignes de sortie (5, 6),
**caractérisé en ce que**
f) le premier dispositif de manipulation et le deuxième dispositif de manipulation présentent un ensemble d'électrodes commun (7) et,
g) que l'ensemble d'électrodes commun (7) est disposé dans la zone de bifurcation.

2. Système microfluidique selon la revendication 1, **caractérisé en ce que** l'ensemble d'électrodes commun forme en outre un troisième dispositif de manipulation.

3. Système microfluidique selon l'une des revendications précédentes, **caractérisé en ce que** l'ensemble d'électrodes commun (7) présente au moins une électrode qui est à la fois une composante du premier dispositif de manipulation et une composante du deuxième dispositif de manipulation.

4. Système microfluidique selon l'une des revendications 2 à 3, **caractérisé en ce que** le troisième dispositif de manipulation est un dispositif de centrage qui centre les particules dans le canal de courant porteur.

5. Système microfluidique selon l'une des revendications précédentes, **caractérisé en ce que**
a) l'ensemble d'électrodes (7) présente au moins une électrode en forme de flèche (13) et plusieurs électrodes de déviation,
b) que l'électrode en forme de flèche (13) est dirigée contre le sens d'écoulement du courant porteur,
c) que les électrodes de déviation sont disposées en amont de l'électrode en forme de flèche (13) et se rencontrent contre l'électrode en forme de flèche (13).

6. Système microfluidique selon l'une des revendications précédentes, **caractérisé en ce que** l'ensemble d'électrodes (7) présente quatre, six ou huit électrodes commandables séparément.

7. Système microfluidique selon l'une des revendications précédentes, **caractérisé en ce que** la cage de champs présente huit électrodes (44-47) alors que l'unité de centrage (48, 49) présente quatre électrodes, les quatre électrodes placées en amont (45, 46) de la cage de champs étant reliées électriquement à respectivement une des électrodes (48, 49) de l'unité de centrage.

8. Système microfluidique selon l'une des revendications précédentes, **caractérisé par** une première station de mesure (8) qui analyse les particules (2) en suspension dans le courant porteur en état d'écoulement en amont de l'ensemble d'électrodes commun (7).

9. Système microfluidique selon l'une des revendications précédentes, **caractérisé par** une deuxième station de mesure (9) qui analyse les particules (2) fixées dans la cage de champs.

10. Système microfluidique selon l'une des revendications précédentes, **caractérisé par** une unité de commande destinée à commander l'ensemble d'électrodes commun, l'unité de commande étant reliée côté entrée à la première station de mesure et/ou à la deuxième station de mesure et commandant l'ensemble d'électrodes commun en fonction de l'analyse dans la première station de mesure et/ou la deuxième station de mesure.

11. Trieur de particules avec un système microfluidique selon l'une des revendications précédentes.

12. Procédé de commande d'un ensemble d'électrodes (7) disposé dans un canal de courant porteur (1) d'un système microfluidique, un courant s'écoulant dans le canal de courant porteur (1) avec des particules (2) en suspension dans celui-ci, comprenant les étapes suivantes :
a) commande électrique de l'ensemble d'électrodes (7), de façon à ce que les particules (2) en suspension dans le courant porteur soient soumises à une première manipulation par l'ensemble d'électrodes (7), la première manipulation comprenant une fixation des particules (2) en suspension,
b) commande de l'ensemble d'électrodes (7) au choix pour exécuter la première manipulation sur les particules (2) ou pour exécuter une deuxième manipulation sur les particules (2),
**caractérisé en ce que**
c) la deuxième manipulation comprend un tri des particules (2) en suspension et
d) que l'ensemble d'électrodes commun (7) est disposé dans une zone de bifurcation dans laquelle le canal de courant porteur (1) bifurque dans les lignes de sortie (5, 6).

13. Procédé de commande selon la revendication 12,
**caractérisé en ce que** les particules (2) en suspension dans le courant porteur sont analysées.

14. Procédé de commande selon la revendication 13,
**caractérisé en ce** l'ensemble d'électrodes (7) est commandé en fonction de l'analyse des particules (2) pour exécuter la première manipulation et/ou la deuxième manipulation.

15. Emploi d'un système microfluidique selon l'une des revendications 1 à 10 pour analyser et/ou trier des particules, particulièrement de cellules biologiques.
